# EUROPEAN PATENT SPECIFICATION

(11) **EP 2 099 170 B1**
(45) Date of publication and mention of the grant of the patent: **24.05.2017**
(21) Application number: 07845768.6
(22) Date of filing: 30.11.2007
(51) Int. Cl.: H04W 72/00

(54) **A METHOD FOR ACQUIRING RADIO NETWORK TEMPORARY IDENTIFICATION OF HIGH SPEED DOWNLINK SHARED CHANNEL AND THE DEVICE THEREOF**
EIN VERFAHREN ZUR ERLANGUNG VON VORLÄUFIGER FUNKNETZWERKKENNUNG EINES GETEILTEN ABWÄRTSHOCHGESCHWINDIGKEITSKANALS UND DAS GERÄT DAFÜR
PROCÉDÉ POUR OBTENIR L'IDENTIFICATION TEMPORAIRE D'UN RÉSEAU RADIO D'UN CANAL PARTAGÉ DE LIAISON DESCENDANTE GRANDE VITESSE ET DISPOSITIF ASSOCIÉ

(30) Priority: 12.01.2007 CN 200710000880
(43) Date of publication of application: 09.09.2009
(73) Proprietor: ZTE Corporation, Shenzhen, Guangdong 518057 (CN)
(72) Inventor: KE, Yazhu, Guangdong 518057 (CN); CHENG, Xiang, Guangdong 518057 (CN)
(74) Representative: Manitz Finsterwald Patentanwälte PartmbB
(86) International application number: PCT/CN2007/003405
(87) International publication number: WO 2008/083548

(56) References cited:
- WO-A1-2004/028174
- WO-A2-2006/035297
- WO-A2-2006/114683
- CN-A- 1 669 341
- CN-A- 1 819 694
- CN-A- 1 819 694

## Description

### Filed of the Invention

The present invention relates to communication field, more specifically, to a method for acquiring radio network temporary identification of high speed downlink shared channel and a device thereof, which are used for a common state base station of an enhanced connecting mode to acquire the radio network temporary identification of high speed downlink shared channel when using the high speed shared channel. Related technology is known from WO 2006/035297 A2.

### Background of the Invention

In communication field, to improve user data flow and system throughput, it is introduced by R5 standard protocol of 3GPP (3rd Generation Partnership Project) a High Speed Packet Shared Transmission Channel (High Speed Downlink Shared Channel, HS-DSCH) which maps the physical channel that adopts the time division manner and the code division manner and adopts HARQ (Hybrid Automatic Repeat) and AMC (Adaptive Modulation and Coding), so that the peak rate can reach 10.8Mbps to 30Mbps. The final object is to increase system capacity and reduce transmission delay by providing high speed packet service access, thereby increasing QoS (Quality of Service) demand for users.

3GPP protocol standards enhance the forward access state in RRC (Radio Resource Control) connecting mode (CELL_FACH, Cell Forward Access Channel) and/or the paging state in RRC connecting mode (CELL_PCH, Cell Paging Channel /URA_PCH, UTRAN Registration Area Paging Channel), that is, HSDPA (High Speed Downlink Packet Access) technology can also be used in the state of CELL_FACH and/or CELL_PCH/URA_PCH (herein the use of HSDPA (High Speed Downlink Packet Access) technology in the state of CELL_FACH and/or CELL_PCH/URA_PCH is called the common state of enhanced connecting mode for short). However, the principle of HSDPA technology is that the user equipment needs to first monitor HS-SCCH (Shared Control Channel for High Speed Downlink Shared Channel) via H-RNTI (Radio Network Temporary Identification of High Speed Downlink Shared Channel) to acquire signaling parameters of High Speed Physical Downlink Shared Channel and can then receive data of HS-PDSCH (High Speed Physical Downlink Shared Channel).

When the user equipment is in the common state of enhanced connecting mode, the data of logical channels such as CCCH (Common Control Channel), PCCH (Paging Control Channel), DCCH (Dedicated Control Channel), DTCH (Dedicated Traffic Channel), MCCH (Multimedia Control Channel) and MTCH (Multimedia Traffic Channel) etc. can be all mapped onto High Speed Physical Downlink Shared Channel to send, and the user equipment and base station need to obtain one predefined H-RNTI identification to guarantee that the user in the common state of enhanced connecting mode can correctly receive data in High Speed Physical Downlink Shared Channel.

Hence, a method for acquiring radio network temporary identification of High Speed Downlink Shared Channel and a device thereof are needed for the base station in the common state of enhanced connecting mode to acquire radio network temporary identification of High Speed Downlink Shared Channel when High Speed Downlink Shared Channel is used.

### Summery of the Invention

To solve the above problem, the present invention provides a method for acquiring radio network temporary identification of High Speed Downlink Shared Channel and a device thereof so that the base station can use the correct H-RNTI as the mask of Shared Control Channel in High Speed Downlink Shared Channel and the UE can correctly monitor the Shared Control Channel of High Speed Downlink Shared Channel to be received and then receive the data of High Speed Physical Downlink Shared Channel, thereby guaranteeing user's QoS (Quality of Service).

In one aspect of the present invention, it is provided a method for acquiring radio network temporary identification of High Speed Downlink Shared Channel, which is used for a base station in the common state of enhanced connecting mode to acquire radio network temporary identification of High Speed Downlink Shared Channel when High Speed Downlink Shared Channel is used, comprising the following steps:
Step 102: a radio network controller, via signaling, informs the base station of radio network temporary identification of High Speed Downlink Shared Channel available for an user equipment in the common state of enhanced connecting mode;
Step 104: the base station acquires the radio network temporary identification of High Speed Downlink Shared Channel from the signaling;
Step 106: when the base station needs to send the data in the common state of enhanced connecting mode, the radio network temporary identification of High Speed Downlink Shared Channel is used as a mask of Shared Control Channel in High Speed Downlink Shared Channel to perform the baseband processing such that it is used as the identification with which the user equipment monitors Shared Control Channel in High Speed Downlink Shared Channel and the data of High Speed Physical Downlink Shared Channel is received.

According to one aspect of the present invention, the signaling is common transmission channel establishment request message or common transmission channel reconfiguration request message.

According to one aspect of the present invention, it also comprises the following step: after acquiring the radio network temporary identification of High Speed Downlink Shared Channel from the signaling, the base station returns common transmission channel establishment response message or common transmission channel reconfiguration response message to the radio network controller.

Additionally, according to one aspect of the present invention, the radio network temporary identification of High Speed Downlink Shared Channel is associated with anyone of the following: logical channel, transmission channel, multimedia access control flow of High Speed Shared Channel, priority queue or multimedia broadcast multicast service.

In another aspect of the present invention, it is also provided a device for acquiring radio network temporary identification of High Speed Downlink Shared Channel which is used for the base station in the common state of enhanced connecting mode to acquire radio network temporary identification of High Speed Downlink Shared Channel when High Speed Shared Channel is used, comprising an notifying unit for notifying via signaling the base station of radio network temporary identification of High Speed Downlink Shared Channel which is available for the user equipment in the common state of enhanced connecting mode; an acquiring unit for acquiring from the signaling the radio network temporary identification of High Speed Downlink Shared Channel; and a processing unit in which when the base station needs to send the data in the common state of enhanced connecting mode, the radio network temporary identification of High Speed Downlink Shared Channel is used as the mask of Shared Control Channel in High Speed Downlink Shared Channel to perform the baseband processing such that it is used as the identification with which the user equipment monitors Shared Control Channel in High Speed Downlink Shared Channel and the data of High Speed Physical Downlink Shared Channel is received,

According to another aspect of the present invention, the signaling is common transmission channel establishment request message or common transmission channel reconfiguration request message.

Additionally, according to another aspect of the present invention, the device further comprises a responding unit for returning common transmission channel establishment response message or common transmission channel reconfiguration response message to the radio network controller after the base station acquires the radio network temporary identification of High Speed Downlink Shared Channel from the signaling.

Additionally, according to another aspect of the present invention, the radio network temporary identification of High Speed Downlink Shared Channel is associated with anyone of the following: logical channel, transmission channel, multimedia access control flow of High Speed Shared Channel, priority queue or multimedia broadcast multicast service.

It can thus be seen that with the present invention the base station can use the correct H-RNTI as the mask of Shared Control Channel in High Speed Downlink Shared Channel such that the UE can correctly monitor the Shared Control Channel of High Speed Downlink Shared Channel to be received and then receive the data of High Speed Physical Downlink Shared Channel, thereby guaranteeing user's QoS (Quality of Service).

Additional features and advantages of the invention will be set forth in the description given below and will partly become apparent from the description or may be understood from practice of the invention. The objectives and other advantages of the invention may be realized and attained by the structure particularly pointed out in the written description and claims hereof as well as the appended drawings.

### Brief Description of the Drawings

The figures illustrated here provide a further understanding to the present invention and constitute a part of the present application. The figures together with the embodiments of the present invention serve to explain the present invention and are not intended to restrict it, in which:
Figure 1 is a flow chart of the method for acquiring radio network temporary identification of High Speed Downlink Shared Channel according to the present invention;
Figure 2 is a flow chart of the method according to the embodiment of the present invention in which the base station in the common state of enhanced connecting mode acquires radio network temporary identification of High Speed Downlink Shared Channel when High Speed Shared Channel is used;
Figure 3 is a block diagram of the device for acquiring radio network temporary identification of High Speed Downlink Shared Channel according to the present invention.

### Detailed Description

The embodiments of the present invention will be in detail illustrated in combination with the accompanying drawings as follows. It is understood that the preferred embodiments described here only serve to describe and explain the present invention and are not intended to restrict it.

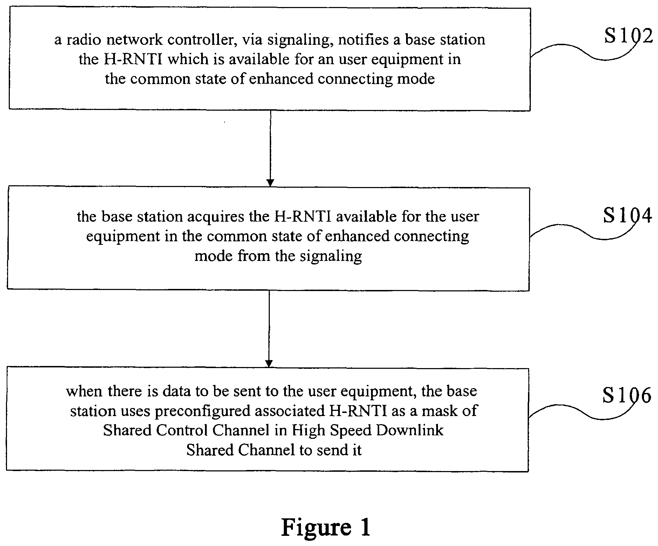

The basic principle of the present invention will be introduced briefly in combination with figure 1 as follows. Figure 1 is a flow chart of the method for acquiring radio network temporary identification of High Speed Downlink Shared Channel according to the present invention. As shown in figure 1, the method for acquiring radio network temporary identification of High Speed Downlink Shared Channel comprises the followings steps:
Step 102: a radio network controller, via signaling, notifies to a base station the radio network temporary identification of High Speed Downlink Shared Channel which is available for the user equipment in the common state of enhanced connecting mode;
Step 104: the base station acquires the radio network temporary identification of High Speed Downlink Shared Channel from the signaling; and
Step 106: when the base station needs to sending the data in the common state of enhanced connecting mode, the radio network temporary identification of High Speed Downlink Shared Channel is used as the mask for Shared Control Channel in High Speed Downlink Shared Channel to perform the baseband processing such that it is used as the identification with which the user equipment monitors Shared Control Channel in High Speed Downlink Shared Channel and the data of High Speed Physical Downlink Shared Channel is received.

Here, the signaling is common transmission channel establishment request message or common transmission channel reconfiguration request message. Additionally, the present invention further comprises the following step: after the base station acquires the radio network temporary identification of High Speed Downlink Shared Channel from the signaling, common transmission channel establishment response message or common transmission channel reconfiguration response message are returned to the radio network controller.

It is noted that the radio network temporary identification of High Speed Downlink Shared Channel is associated with anyone of the following: logical channel, transmission channel, multimedia access control flow of High Speed Shared Channel, priority queue or multimedia broadcast multicast service.

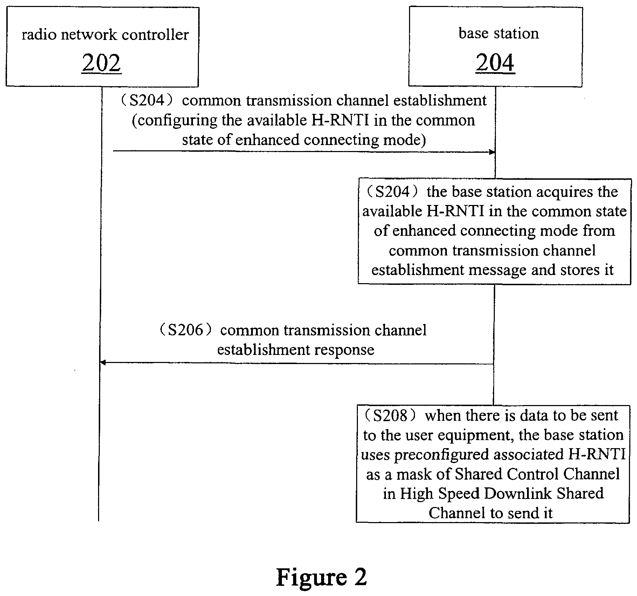

The above method will be particularly carried out in a radio network controller 202 and base station 204. In combination with figure 2, it is described the method in which the base station 204 in the common state of enhanced connecting mode acquires radio network temporary identification of High Speed Downlink Shared Channel when High Speed Shared Channel is used. Figure 2 is a flow chart of the method according to the embodiment of the present invention by which the base station 204 in the common state of enhanced connecting mode acquires radio network temporary identification of High Speed Downlink Shared Channel when High Speed Shared Channel is used.

As shown in figure 2, the method comprises the followings steps:
Step 202: a radio network controller 202, via common transmission channel establishment message, notifies to a base station 204 the H-RNTI available for the user equipment in the common state of enhanced connecting mode;
Step 204: the base station 204 acquires the H-RNTI available for the user equipment in the common state of enhanced connecting mode from the signaling;
Step 206: the base station 204 returns common transmission channel establishment response message to the radio network controller 202; and
Step 208: when the base station 204 needs to send the data of the user equipment in the common state of enhanced connecting mode, the H-RNTI is used as the mask of Shared Control Channel in High Speed Downlink Shared Channel to perform the baseband processing such that it is used as the identification with which the user equipment monitors Shared Control Channel in High Speed Downlink Shared Channel.

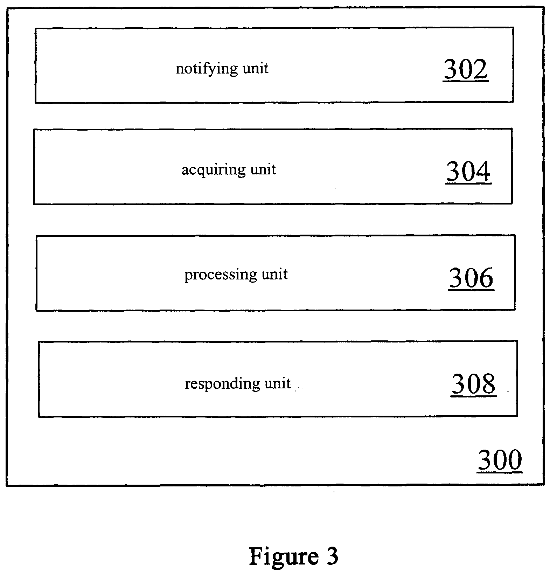

Figure 3 is a block diagram of the device 300 for acquiring radio network temporary identification of High Speed Downlink Shared Channel according to the present invention. As shown in figure 3, the device 300 for acquiring radio network temporary identification of High Speed Downlink Shared Channel is used for the base station in the common state of enhanced connecting mode to acquire radio network temporary identification of High Speed Downlink Shared Channel when High Speed Shared Channel is used, comprising an notifying unit 302 for notifying, via signaling, to a base station the radio network temporary identification of High Speed Downlink Shared Channel which is available for a user equipment in the common state of enhanced connecting mode; an acquiring unit 304 for acquiring the radio network temporary identification of High Speed Downlink Shared Channel from the signaling; and a processing unit 306 in which when the base station needs to send the data in the common state of enhanced connecting mode, the radio network temporary identification of High Speed Downlink Shared Channel is used as the mask of Shared Control Channel in High Speed Downlink Shared Channel to perform the baseband processing such that it is used as the identification with which the user equipment monitors Shared Control Channel in High Speed Downlink Shared Channel and the data of High Speed Physical Downlink Shared Channel is received.

Here, the signaling is common transmission channel establishment request message or common transmission channel reconfiguration request message. Additionally, the device 300 further comprises a responding unit 308 for returning common transmission channel establishment response message or common transmission channel reconfiguration response message to the radio network controller after the base station acquires the radio network temporary identification of High Speed Downlink Shared Channel from the signaling.

The radio network temporary identification of High Speed Downlink Shared Channel is associated with anyone of the following: logical channel, transmission channel, multimedia access control flow of High Speed Shared Channel, priority queue or multimedia broadcast multicast service.

## Claims

1. A method for acquiring radio network temporary identification of High Speed Downlink Shared Channel which is used for a base station (204) in common state of enhanced connecting mode to acquire radio network temporary identification of High Speed Downlink Shared Channel when High Speed Shared Channel is used, comprising the following steps:
a radio network controller (202), via signaling, notifying (S204) to the base station (204) the radio network temporary identification of High Speed Downlink Shared Channel which is available for an user equipment in the common state of enhanced connecting mode;
the base station (204) acquiring (S204) the radio network temporary identification of High Speed Downlink Shared Channel from the signaling; and
when the base station (204) needs to send the data in the common state of enhanced connecting mode, the radio network temporary identification of High Speed Downlink Shared Channel is used as a mask for Shared Control Channel in High Speed Downlink Shared Channel to perform baseband processing such that it is used as an identification with which the user equipment monitors the Shared Control Channel in High Speed Downlink Shared Channel and the data of High Speed Physical Downlink Shared Channel is received.

2. The method for acquiring radio network temporary identification of High Speed Downlink Shared Channel according to claim 1, wherein the signaling is common transmission channel establishment request message or common transmission channel reconfiguration request message.

3. The method for acquiring radio network temporary identification of High Speed Downlink Shared Channel according to claim 2, wherein the method further comprises the following step:
after the base station (204) acquires the radio network temporary identification of High Speed Downlink Shared Channel from the signaling, common transmission channel establishment response message or common transmission channel reconfiguration response message are returned to the radio network controller (S206).

4. The method for acquiring radio network temporary identification of High Speed Downlink Shared Channel according to anyone of claims 1 to 4, wherein the radio network temporary identification of High Speed Downlink Shared Channel is associated with anyone of the following:
logical channel, transmission channel, multimedia access control flow of High Speed Shared Channel, priority queue or multimedia broadcast multicast service.

5. A device (300) for acquiring radio network temporary identification of High Speed Downlink Shared Channel which is used for a base station (204) in common state of enhanced connecting mode to acquire radio network temporary identification of High Speed Downlink Shared Channel when High Speed Shared Channel is used, comprising
a notifying unit (302) for notifying, via signaling, to the base station (204) the radio network temporary identification of High Speed Downlink Shared Channel which is available for a user equipment in the common state of enhanced connecting mode;
an acquiring unit (304) for acquiring the radio network temporary identification of High Speed Downlink Shared Channel from the signaling; and
a processing unit in (306) which when the base station (204) needs to send the data in the common state of enhanced connecting mode, the radio network temporary identification of High Speed Downlink Shared Channel is used as a mask for Shared Control Channel in High Speed Downlink Shared Channel to perform baseband processing such that it is used as an identification with which the user equipment monitors Shared Control Channel in High Speed Downlink Shared Channel and the data of High Speed Physical Downlink Shared Channel is received,.

6. The device for acquiring radio network temporary identification of High Speed Downlink Shared Channel according to claim 5, wherein the signaling is common transmission channel establishment request message or common transmission channel reconfiguration request message.

7. The device for acquiring radio network temporary identification of High Speed Downlink Shared Channel according to claim 6, wherein the device further comprises:
a responding unit (308) for returning common transmission channel establishment response message or common transmission channel reconfiguration response message to the radio network controller after the base station (204) acquires the radio network temporary identification of High Speed Downlink Shared Channel from the signaling.

8. The device for acquiring radio network temporary identification of High Speed Downlink Shared Channel according to anyone of claims 5 to 7, wherein the radio network temporary identification of High Speed Downlink Shared Channel is associated with anyone of the following:
logical channel, transmission channel, multimedia access control flow of High Speed Shared Channel, priority queue or multimedia broadcast multicast service of.

## Patentansprüche

1. Verfahren zum Beschaffen einer temporären Funknetzwerkkennung eines gemeinsam genutzten Hochgeschwindigkeits-Downlinkkanals, der für eine Basisstation (204) in einem allgemeinen Zustand eines verbesserten Verbindungsmodus verwendet wird, um eine temporäre Funknetzwerkkennung des gemeinsam genutzten Hochgeschwindigkeits-Downlinkkanals zu beschaffen, wenn ein gemeinsam genutzter Hochgeschwindigkeitskanal verwendet wird, wobei das Verfahren die folgenden Schritte umfasst, dass:
ein Funknetzwerkcontroller (202) der Basisstation (204) die temporäre Funknetzwerkkennung des gemeinsam genutzten Hochgeschwindigkeits-Downlinkkanals, welcher für ein Benutzergerät in dem allgemeinen Zustand eines verbesserten Verbindungsmodus verfügbar ist, über eine Signalisierung mitteilt (S204);
die Basisstation (204) aus der Signalisierung die temporäre Funknetzwerkkennung des gemeinsam genutzten HochgeschwindigkeitsDownlinkkanals beschafft (S204); und
wenn die Basisstation (204) die Daten in dem gemeinsamen Zustand eines verbesserten Verbindungsmodus senden muss, die temporäre Funknetzwerkkennung des gemeinsam genutzten HochgeschwindigkeitsDownlinkkanals als Maske für einen gemeinsam genutzten Steuerungskanal in dem gemeinsam genutzten Hochgeschwindigkeits-Downlinkkanal verwendet wird, um eine Basisbandverarbeitung auszuführen, sodass sie als eine Kennung verwendet wird, mit welcher das Benutzergerät den gemeinsam genutzten Steuerungskanal in dem gemeinsam genutzten Hochgeschwindigkeits-Downlinkkanal überwacht und die Daten eines gemeinsam genutzten physikalischen Hochgeschwindigkeits-Downlinkkanals empfangen werden.

2. Verfahren zum Beschaffen einer temporären Funknetzwerkkennung eines gemeinsam genutzten Hochgeschwindigkeits-Downlinkkanals nach Anspruch 1,
wobei die Signalisierung eine Anforderungsnachricht zur Herstellung eines gemeinsamen Übertragungskanals oder eine Anforderungsnachricht zur Neukonfiguration eines gemeinsamen Übertragungskanals ist.

3. Verfahren zum Beschaffen einer temporären Funknetzwerkkennung eines gemeinsam genutzten Hochgeschwindigkeits-Downlinkkanals nach Anspruch 2, wobei das Verfahren ferner den folgenden Schritt umfasst, dass:
nachdem die Basisstation (204) die temporäre Funknetzwerkkennung des gemeinsam genutzten Hochgeschwindigkeits-Downlinkkanals aus der Signalisierung beschafft hat, eine Antwortnachricht zur Herstellung eines gemeinsamen Übertragungskanals oder eine Antwortnachricht zur Neukonfiguration eines gemeinsamen Übertragungskanals zurück an den Funknetzwerkcontroller übertragen wird (S206).

4. Verfahren zum Beschaffen einer temporären Funknetzwerkkennung eines gemeinsam genutzten Hochgeschwindigkeits-Downlinkkanals nach einem der Ansprüche 1 bis 4, wobei die temporäre Funknetzwerkkennung des gemeinsam genutzten Höchgeschwindigkeits-Downlinkkanals einem beliebigen der Folgenden zugeordnet ist: einem logischen Kanal, einem Übertragungskanal, einem Steuerungsablauf für Multimediazugriff eines gemeinsam genutzten Hochgeschwindigkeitskanals, einer Prioritäts-Warteschlange oder einem Multimediarundfunk-Multicastdienst.

5. Vorrichtung (300) zum Beschaffen einer temporären Funknetzwerkkennung eines gemeinsam genutzten Hochgeschwindigkeits-Downlinkkanals, welcher für eine Basisstation (204) in einem allgemeinen Zustand eines verbesserten Verbindungsmodus verwendet wird, um eine temporäre Funknetzwerkkennung des gemeinsam genutzten HochgeschwindigkeitsDownlinkkanals zu beschaffen, wenn ein gemeinsam genutzter Hochgeschwindigkeitskanal verwendet wird, umfassend:
eine Benachrichtigungseinheit (302) um der Basisstation (204) über eine Signalisierung die temporäre Funknetzwerkkennung des gemeinsam genutzten Hochgeschwindigkeits-Downlinkkanals mitzuteilen, welcher für ein Benutzergerät in dem allgemeinen Zustand eines verbesserten Verbindungsmodus verfügbar ist;
eine Beschaffungseinheit (304) zum Beschaffen der temporären Funknetzwerkkennung des gemeinsam genutzten HochgeschwindigkeitsDownlinkkanals aus der Signalisierung; und
eine Verarbeitungseinheit (306), in welcher, wenn die Basisstation (204) die Daten in dem allgemeinen Zustand eines verbesserten Verbindungsmodus senden muss, die temporäre Funknetzwerkkennung des gemeinsam genutzten Hochgeschwindigkeits-Downlinkkanals als Maske für einen gemeinsam genutzten Steuerungskanal in dem gemeinsam genutzten Hochgeschwindigkeits-Downlinkkanal verwendet wird, um eine Basisbandverarbeitung anzuführen, sodass sie als eine Kennung verwendet wird, mit welcher das Benutzergerät den gemeinsam genutzten Steuerungskanal in dem gemeinsam genutzten Hochgeschwindigkeits-Downlinkkanal überwacht und die Daten eines gemeinsam genutzten physikalischen Hochgeschwindigkeits-Downlinkkanals empfangen werden.

6. Vorrichtung zum Beschaffen einer temporären Funknetzwerkkennung eines gemeinsam genutzten Hochgeschwindigkeits-Downlinkkanals nach Anspruch 5,
wobei die Signalisierung eine Anforderungsnachricht zur Herstellung eines gemeinsamen Übertragungskanals oder eine Anforderungsnachricht zur Neukonfiguration eines gemeinsamen Übertragungskanals ist.

7. Vorrichtung zum Beschaffen einer temporären Funknetzwerkkennung eines gemeinsam genutzten Hochgeschwindigkeits-Downlinkkanals nach Anspruch 6, wobei die Vorrichtung ferner umfasst:
eine Antworteinheit (308) zum Zurückgeben einer Antwortnachricht zur Herstellung eines gemeinsamen Übertragungskanals oder einer Antwortnachricht zur Neukonfiguration eines gemeinsamen Übertragungskanals an den Funknetzwerkcontroller, nachdem die Basisstation (204) die temporäre Funknetzwerkkennung des gemeinsam genutzten Hochgeschwindigkeits-Downlinkkanals aus der Signalisierung beschafft hat.

8. Vorrichtung zum Beschaffen einer temporären Funknetzwerkkennung eines gemeinsam genutzten Hochgeschwindigkeits-Downlinkkanals nach einem der Ansprüche 5 bis 7,
wobei die temporäre Funknetzwerkkennung des gemeinsam genutzten Hochgeschwindigkeits-Downlinkkanals einem beliebigen der Folgenden zugeordnet ist: einem logischem Kanal, einem Übertragungskanal, einem Steuerungsablauf für Multimediazugriff eines gemeinsam genutzten Hochgeschwindigkeitskanals, einer Prioritäts-Warteschlange oder einem Multimediarundfunk-Multicastdienst.

## Revendications

1. Procédé pour acquérir une identification temporaire de réseau radio de canal partagé de liaison descendante à grande vitesse qui est utilisée pour une station de base (204) dans un état commun de mode de connexion amélioré afin d'acquérir une identification temporaire de réseau radio de canal partagé de liaison descendante à grande vitesse lorsque qu'un canal partagé à grande vitesse est utilisé, comprenant les étapes suivantes :
la notification (S204) à la station de base (204) par un contrôleur de réseau radio (202), par signalisation, de l'identification temporaire de réseau radio de canal partagé de liaison descendante à grande vitesse qui est disponible pour un équipement d'utilisateur dans l'état commun de mode de connexion amélioré ;
l'acquisition (S204) par la station de base (204) de l'identification temporaire de réseau radio de canal partagé de liaison descendante à grande vitesse à partir de la signalisation ; et
lorsque la station de base (204) a besoin d'envoyer les données dans l'état commun de mode de connexion amélioré, l'utilisation de l'identification temporaire de réseau radio de canal partagé de liaison descendante à grande vitesse comme masque pour un canal de commande partagé dans le canal partagé de liaison descendante à grande vitesse pour effectuer un traitement de bande de base de telle sorte qu'elle soit utilisée comme identification avec laquelle l'équipement d'utilisateur contrôle le canal de commande partagé dans le canal partagé de liaison descendante à grande vitesse et les données de canal partagé de liaison descendante physique à grande vitesse sont reçues.

2. Procédé pour acquérir une identification temporaire de réseau radio de canal partagé de liaison descendante à grande vitesse selon la revendication 1, dans lequel la signalisation est un message de demande d'établissement de canal de transmission commun ou un message de demande de reconfiguration de canal de transmission commun.

3. Procédé pour acquérir une identification temporaire de réseau radio de canal partagé de liaison descendante à grande vitesse selon la revendication 2, le procédé comprenant de plus l'étape suivante :
après que la station de base (204) a acquis l'identification temporaire de réseau radio de canal partagé de liaison descendante à grande vitesse à partir de la signalisation, le retour au contrôleur de réseau radio (S206) d'un message de réponse d'établissement de canal de transmission commun ou d'un message de réponse de reconfiguration de canal de transmission commun.

4. Procédé pour acquérir une identification temporaire de réseau radio de canal partagé de liaison descendante à grande vitesse selon l'une quelconque des revendications 1 à 4, dans lequel l'identification temporaire de réseau radio de canal partagé de liaison descendante à grande vitesse est associée à l'un quelconque de ce qui suit : un canal logique, un canal de transmission, un flux de commande d'accès multimédia de canal partagé à grande vitesse, une file d'attente de priorité ou un service multidiffusion de retransmission multimédia.

5. Dispositif (300) pour acquérir une identification temporaire de réseau radio de canal partagé de liaison descendante à grande vitesse qui est utilisée pour une station de base (204) dans un état commun de mode de connexion amélioré afin d'acquérir une identification temporaire de réseau radio de canal partagé de liaison descendante à grande vitesse lorsqu'un canal partagé à grande vitesse est utilisé, comprenant :
une unité de notification (302) pour notifier, par signalisation, à la station de base (204), l'identification temporaire de réseau radio de canal partagé de liaison descendante à grande vitesse qui est disponible pour un équipement d'utilisateur dans l'état commun de mode de connexion amélioré ;
une unité d'acquisition (304) pour acquérir l'identification temporaire de réseau radio de canal partagé de liaison descendante à grande vitesse à partir de la signalisation ; et
une unité de traitement (306) dans laquelle, lorsque la station de base (204) a besoin d'envoyer les données dans l'état commun de mode de connexion amélioré, l'identification temporaire de réseau radio de canal partagé de liaison descendante à grande vitesse est utilisée comme masque pour un canal de commande partagé dans le canal partagé de liaison descendante à grande vitesse pour effectuer un traitement de bande de base de telle sorte qu'elle soit utilisée comme identification avec laquelle l'équipement d'utilisateur contrôle le canal de commande partagé dans le canal partagé de liaison descendante à grande vitesse et les données de canal partagé de liaison descendante physique à grande vitesse sont reçues.

6. Dispositif pour acquérir une identification temporaire de réseau radio de canal partagé de liaison descendante à grande vitesse selon la revendication 5, dans lequel la signalisation est un message de demande d'établissement de canal de transmission commun ou un message de demande de reconfiguration de canal de transmission commun.

7. Dispositif pour acquérir une identification temporaire de réseau radio de canal partagé de liaison descendante à grande vitesse selon la revendication 6, le dispositif comprenant de plus :
une unité de réponse (308) pour renvoyer un message de réponse d'établissement de canal de transmission commun ou un message de réponse de reconfiguration de canal de transmission commun au contrôleur de réseau radio après que la station de base (204) a acquis l'identification temporaire de réseau radio de canal partagé de liaison descendante à grande vitesse à partir de la signalisation.

8. Dispositif pour acquérir une identification temporaire de réseau radio de canal partagé de liaison descendante à grande vitesse selon l'une quelconque des revendications 5 à 7, dans lequel l'identification temporaire de réseau radio de canal partagé de liaison descendante à grande vitesse est associée à l'un quelconque de ce qui suit : un canal logique, un canal de transmission, un flux de commande d'accès multimédia de canal partagé à grande vitesse, une file d'attente de priorité ou un service multidiffusion de retransmission multimédia.
